# EUROPÄISCHE PATENTSCHRIFT

(11) **EP 1 860 360 B1**
(45) Veröffentlichungstag und Bekanntmachung des Hinweises auf die Patenterteilung: **10.02.2010**
(21) Anmeldenummer: 07009597.1
(22) Anmeldetag: 14.05.2007
(51) Int. Cl.: F16K 31/52, B05B 1/30, B05B 1/00

(54) **Handbetätigtes Druckregelventil für Druckluftpistolen**
Manually operated pressure control valve for a compressed air pistol
Soupape de réglage de pression manuelle pour pistolet à air comprimé

(30) Priorität: 22.05.2006 DE 202006008212 U
(43) Veröffentlichungstag der Anmeldung: 28.11.2007
(73) Patentinhaber: Graf-Plastik GmbH & Co. KG, 70771 Leinfelden-Echterdingen (DE)
(72) Erfinder: Graf, Thomas, 70565 Stuttgart (DE)
(74) Vertreter: Ludewig, Rita

(56) Entgegenhaltungen:
- WO-A-03/062542
- DE-A1- 2 414 632
- US-A- 1 085 839
- US-A- 1 185 309

## Beschreibung

Die Erfindung betrifft ein von Hand zu betätigendes Druckregelventil für Druckluftpistolen, insbesondere für Reinigungszwecke in Werkstätten, so zum Reinigen von Arbeitstischen an Zerspanungsmaschinen, von bearbeiteten Werkstücken, von verschmutzten Innenaufbauten von elektrischen und elektronischen Geräten und dergleichen.

Es sind verschiedenen Regelventile für Druckluftpistolen bekannt, die entweder zwischen dem Drurkluftschlauch und dem Griff oder zwischen der Mündung und dem Düsenkörper einer Druckluftpistole angeordnet sind. Diese Regelventile werden auch als Drosseln bezeichnet Sie haben den Nachteil, daß der Düsenquerschnitt nicht einfach von Hand verstellbar ist, sondern mit einem Werkzeug, beispielsweise einem Schraubenschlüssel oder einer Zange gefühlsmäßig auf einen neuen Düsenquerschnitt eingestellt werden müssen. Wenn die vorgenommene Einstellung noch nicht das gewünschte Ergebnis bringt muß nochmals neu eingestellt werden. Diese Methode der Querschnittsregulierung und damit der Druckregulierung ist zeitaufwendig, vom Händling umständlich und von der Wirkung unzureichend, da immer nur ein Querschnitt fest eingestellt werden kann.

Aus der DE 43 16 229 ist auch ein handbetätigtes hydraulisches Druckregelventil bekannt, das über einen mit einer Kurvenbahn zur Einstellung des Steuerdrucks verbundenen Betätigungshebel einstellbar ist. Dabei ist auf der der Kurvenbahn abgewandten Seite eine weitere Kurvenbahn angeordnet, die mit einem Druckstück zusammenwirkt, derart, daß zumindest bei einem bestimmten Schwenkwinkel ein erhöhter Kraftanstieg am Betätigungshebel wirksam ist, wodurch die Anpassung der Regelcharakteristik des Druckregelventils weitgehend unabhängig von den verwendeten Regelfedern ist. Diese Druckregelventile sind aufwendig konstruiert und für die Anwendung an Druckluftpistolen ungeeignet.

Die DE 43 19 159 C1 offenbart eine Druckluftpistole zum Auftragen von pastorösem Material sowie ein Druckreduzierventil insbesondere für eine Druckreduzierventil ausgeführt, wobei das Druckreduzierventil ein Ventilgehäuse mit feststehendem Ventilsitz und einem dagegen beweglichen Ventilkörper mittels einer Feder in Öffnungsrichtung vorgespannt und durch ansteigenden ausgangsseitigen Druck entgegen der Federkraft in Schließrichtung verstellbar ist. Erfindungsgemäß ist ein Ventilkörper - Einstellelement vorgesehen, durch dessen Betätigung der bewegliche Ventilkörper unabhängig vom ausgangsseitigen Druck in Öffnungsrichtung, vorzugsweise bis in seine volle Öffnungsstellung verstellbar ist. Dabei ist das Ventilkörper- Einstellelement ein in axialer Richtung begrenzt verschiebbare Stellhülse ausgeführt. Die Stellhülse läßt sich zwischen zwei Anschlägen auf dem Ventilgehäuse verschieben. Durch entsprechende Einstellung der Stellhülse in eine Richtung wird ein Ringkanal im Ventilgehäuse geöffnet und die eingangseitig anstehende Druckluft kann nicht nur über einen Hauptströmungskanal in der Mitte des Ventilgehäuses strömen, sondern auch auch auf dem Umfang über eine Öffnung über einen Ringkanal und eine zweite Öffnung in eine die Feder enthaltende Kammer eintreten. Die in der Kammer eintretende Drucklufterhöhung bewegt den Ventilkörper in die Öffnungsstellung. Wird die Stellhülse in die entgegengesetzte Richtung geschoben, wird der Ringkanal abgesperrt und gleichzeitig die zweite Öffnung zur Kammer nach außen freigegeben. Die Kammer wird nach außen belüftet, es wirkt nur noch die Kraft der Feder und die Reduzierwirkung des Druckregelventils tritt in vollem Umfang ein. Dieses Druckredizierventil für eine Druckluftpistole ist konstruktiv aufwendig und somit teuer in der Herstellung.

Aus der Offenlegungsschrift 30 13 235, die alle Merkmale des Oberbegriffs von Anspruch 1 offenbart, ist auch ein von Hand zu betätigendes Kegelventil zur Regelung des Durchflusses eines unter Druck stehenden Fluids bekannt, gekennzeichnet durch einen Ventilkörper mit zwei gegenüber liegenden Längskanälen für den Ein- und Auslaß des Fluids, zwei Transversalkanälen, durch welche die Längskanäle miteinander in Verbindung gebracht sind, eine auf einem Gewinde des Ventilkörpers axial bewegliche Hülse, die mit dem Ventilkörper und den Transversalkanälen eine ringförmige Kammer begrenzt, die mit einem Dichtungsring versehen ist, ein im Auslaßlängskanal axial verschiebbares Verschlußglied, das zum Verschließen einer Austrittsöffnung des Austrittskanals gebildet ist und eine elastische Einrichtung, hier eine Feder, die mit dem Verschlußglied zusammenwirkt und dieses in der geöffneten Stellung hält. Auch hier handelt es sich um ein vergleichsweise aufwendig konstruiertes Druckregelventil, bei dem die Druckluftregulierung über zusätzliche Transversalkanäle, eine zusätzliche Kammer und ein Verschlußglied vor der Ventilmündung erfolgt. Außerdem ist die Drehung der Hülse zur Verstellung des Ventils auf einem axial an dem Ventilgehäuse angeordneten Gewinde platzaufwendig. Das Ventilgehäuse muß um diesen Weg verlängert ausgeführt sein.

Es war daher Aufgabe der Erfindung, ein handbetätigtes Druckregelventil für Druckluftpistolen zu schaffen, das als separate kleinräumige und leichte Baugruppe in jede herkömmliche Druckluftpistole zwischen Mündung und Düsenkörper einschraubbar ist, mit dem ein von Hand regelbarer Druckluftstrahl erzeugbar ist, wobei der Regelbereich von maximalem bis minimalem Druckluftaustritt für sehr empfindliche Geräte und Bauteile einstellbar ist, das geräuscharm und energiesparend arbeitet und eine leichte Handhabung während des Arbeitens ermöglicht.

Die Aufgabe wird durch ein handbetätigtes Druckregelventil für Druckluftpistolen mit den kennzeichnenden Merkmalen des Anspruchs 1 gelöst.

Vorteilhaft ist der einfache und leichtgewichtige konstruktive Aufbau des erfindungsgemäßen Druckregelventils, das einen durchgängigen Düsendurchgang aufweist, dessen Querschnitt in einem Bereich des Ventilgrundkörpers durch einen transversal beweglichen Düsendurchgangsbereich beliebig zu verkleinern und zu vergrößern ist. Dies wird durch eine erfindungsgemäße Druckregeleinheit gewährleistet, die in einer, den Düsendurchgang des Ventilgrundkörpers unterbrechenden, Querbohrung transversal beweglich und funktionssicher durch einen, horizontal in einer Ebene verstellbaren Stellring gehalten ist, wobei der in dem Grundkörper der Druckregeleinheit angeordnete Düsendurchgangsbereich den Düsendurchgang im Ventilgrundkörper im Bereich der Querbohrung überbrückt und somit einen, vom Ventileingang bis zum Ventilausgang verlaufendem geschlossenen Düsendurchgang herstellt. Es sind keine zusätzlichen Luftkanäle oder Kammern und kein Düsenverschlußglied erforderlich, die den konstruktiven Aufbau des Druckregelventils verkomplizieren und bereits bei der Herstellung verteuern.

Besonders hervorzuheben ist die erfindungsgemäße Druckregeleinheit, die aus einem Grundkörper mit dem mittig angeordneten Düsendurchgangsstück, einem Federstift und einer Druckfeder gebildet ist, wobei der Federstift durch eine aufsitzende Druckfeder aus dem Grundkörper und der Querbohrung des Ventilgrundkörpers transversal zur Längsachse des Druckregelventils radial beweglich herausragt und durch Drehung des Stellrings nacheinander in mehrere sehr flach ausgeführte Raster eindringt die in der inneren Mantelfläche des Stellrings eingeformt sind. Durch das einrasten des Federstifts in die Raster des Stellrings und die exzentrische Gestaltung der inneren Mantelfläche des Stellrings bewegt sich die Druckregeleinheit in transversaler Richtung und verschiebt das mittige Düsendurchgangsstück zu dem Düsendurchgang des Ventilgrundkörpers, wodurch je nach Drehrichtung des Stellrings der Düsendurchgang verkleinert oder vergrößert und der Druckluftdurchsatz verringert oder verstärkt wird. Bei starker Verkleinerung des Düsendurchgangs kann damit vorteilhaft der Druckluftverbrauch minimiert und Energie gespart werden.

Vorteilhaft ist auch die konstruktive Gestaltung der Druckregeleinheit nach Anspruch 2 bis 4, die es einerseits ermöglichen die Druckregeleinheit in einer horizontalen Ebene mit dem Stellring und einem Sicherungsring am Ventilgrundkörper funktionssicher zu arretieren, den Stellring gleichzeitig als Befestigungselement und als Regelelement zu benutzen und durch die Ausstattung des Grundkörpers der Druckregeleinheit rechts und links neben dem Düsendurchgangsstück mit jeweils mindestens einer angeformten Dichtungslippe, eine Abdichtung des Düsendurchgangs und des transversal verschiebbaren Düsendurchgangsstücks zu gewährleisten. Das erfordert keine zusätzlichen Dichtungselemente, vereinfacht den konstruktiven Aufbau und die Herstellung der Einzelteile des erfindungsgemäßen Druckregelventils sowie dessen Montage.

Der konstruktive Aufbau der Druckregeleinheit und des, gemäß Anspruch 5 bis 8, angeordneten und aufgebauten Stellrings, wird deren Zusammenwirken an einem Ventilgrundkörper gewährleistet, wobei der Ventilgrundkörper als ein einfaches einteiliges Drehteil und der Stellring als einstückiges Spritzgußteil ausführbar und kostengünstig herstellbar ist.

Die für die Ventilteile vorzugsweise eingesetzten Materialien, gemäß Anspruch 8, ermöglichen darüber hinaus eine leichte und verschleißfeste Bauweise, des erfindungsgemäßen Druckregelventils, das als separate kleinräumige und leichte Baugruppe an jede herkömmliche Druckluftpistole zwischen Mündung und Düsenkörper einschraubbar ist.

Schließlich ist jede herkömmliche Druckluftpistole, die mit dem erfindungsgemäßen Druckluftventil ausgestattet ist, während ihrer Benutzung bedarfsweise und fast stufenlos manuell leicht und arbeitszeitsparend von Hand regulierbar. Der Druck der aus dem Düsenkörper austretenden Luft ist innerhalb eines breiten Regelspektrums zu vermindern oder zu verstärken und die Druckluftpistole ist auch für die Reinigung empfindlichster Bauteile und Geräte einsetzbar.

Die Erfindung soll nachstehend anhand von drei Ausführungsbeispielen näher beschrieben werden. Die Zeichnungen zeigen dabei in
- Fig.1: ein komplettes erfindungsgemäßes Druckluftregelventil mit einem Schnitt im Bereich des Stellrings,
- Fig.2: Draufsicht auf einen unmontierten Stellring mit Lagebestimmung der erfindungsgemäßen Druckregeleinheit,
- Fig.3: eine Darstellung des unbestückten Ventilgrundkörpers,
- Fig.4: eine Darstellung des Grundkörpers der Druckregeleinheit,
- Fig.5: eine Darstellung des unbestückten Ventilgnindkörpers um 90° versetzt zu Fig.3,
- Fig.6: eine Darstellung des Grundkörpers der Druckregeleinheit um 90° versetzt zu Fig.4, mit Feder und Federstift,
- Fig.7: eine Darstellung der Außenansicht des erfindungsgemäßen Stellrings,
- Fig.8: eine Draufsicht auf den Stellring,
- Fig.9: eine Vorderansicht des Sicherungsrings.

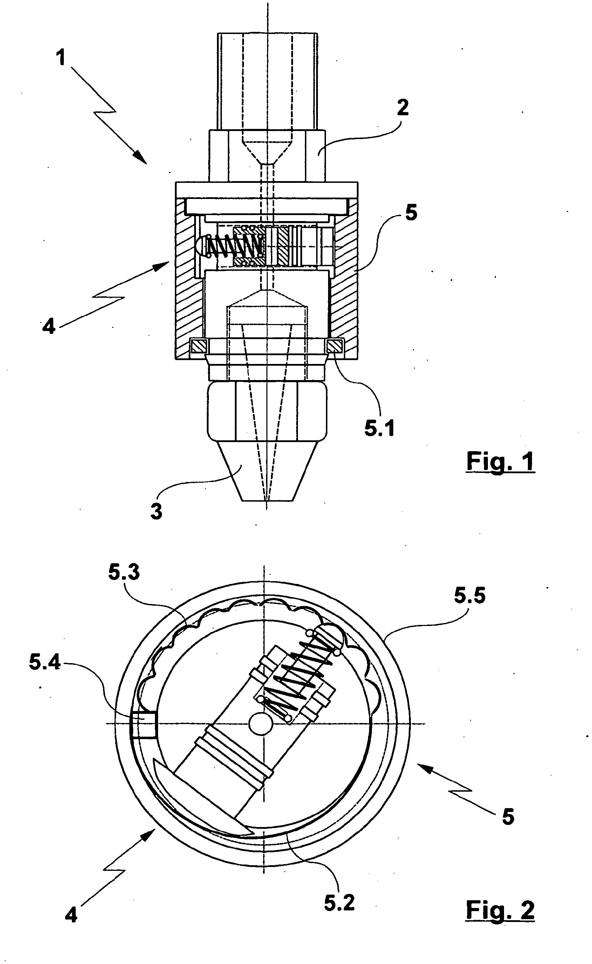

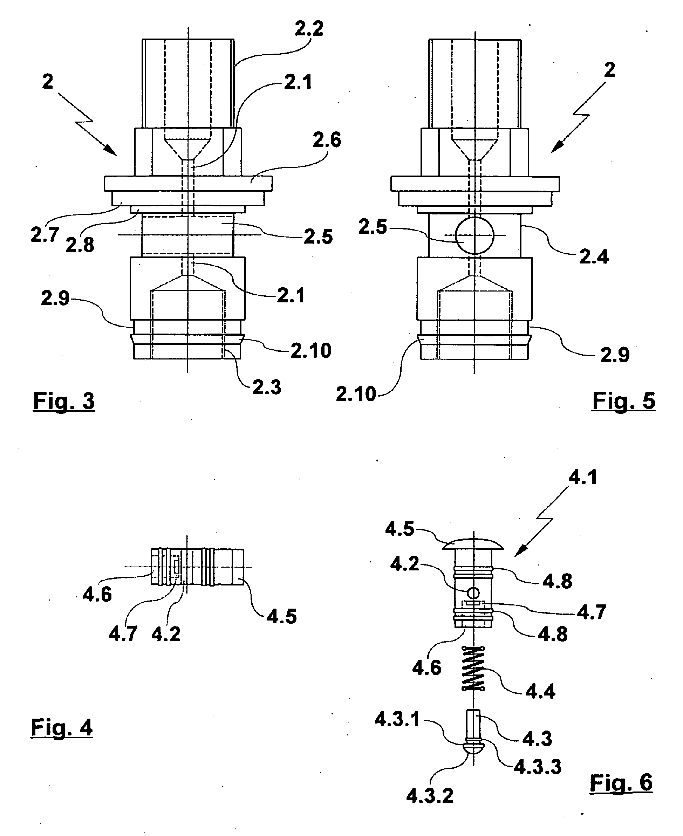

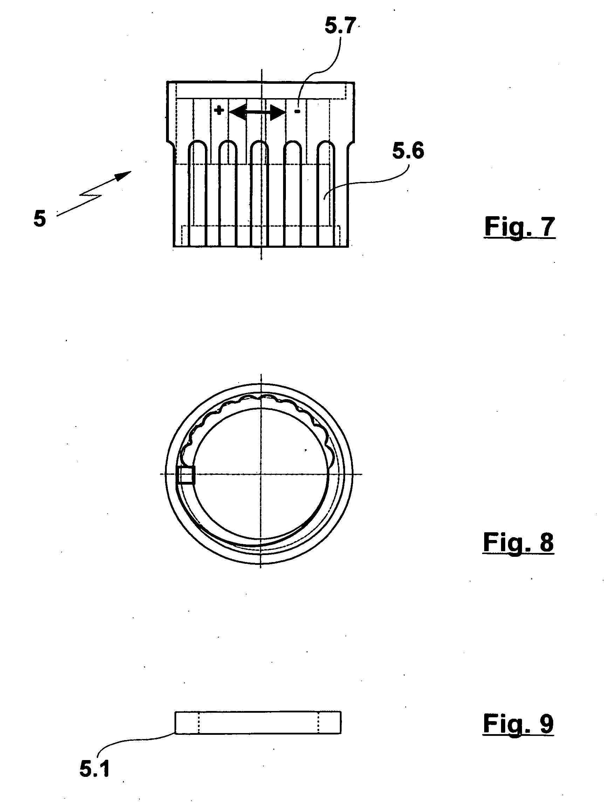

Fig.1 zeigt ein Ausführungsbeispiel des erfindungsgemäßen Druckregelventils 1, das vorzugsweise aus einem Ventilgrundkörper 2, einer Druckregeleinheit 4, einem Stellring 5 und einem Sicherungsring 5.1 gebildet ist. Der Ventilgrundkörper 2 ist gemäß Fig.3 und Fig.5 ein einstückiges Drehteil beispielsweise aus Aluminium und weist einen axialen mittigen Düsendurchgang 2.1, ein Außengewinde 2.2 zum einschrauben des Druckregelventils 1 in die Mündung einer beliebigen Druckluftpistole, ein Innengewinde 2.3 zum einschrauben eines Düsenkörpers 3, eine erste Nut 2.4, eine transversale Durchgangsbohrung 2.5 im Bereich der Nut 2.4, drei aneinander geformte Bundflächen 2.6, 2.7 und 2.8 mit unterschiedlichen Durchmessern, eine zweite Nut 2.9 und eine Fase 2.10 auf.
Die Druckregeleinheit 4 besteht gemäß Fig.4 und Fig.6 aus einem Grundkörper 4.1 mit einem mittig angeordnetem Düsendurchgangsstück 4.2, einem, an einer Stirnseite des Grundkörpers 4.1 angeordneten, etwa ein Drittel des Grundkörpers 4.1 einnehmenden, Hohlraum 4.6, einer Vertiefung 4.7 am Boden des Hohlraums 4.6 zum einrasten der Druckfeder 4.4, einem, an der gegenüberliegenden Stirnseite, rechtwinklig zu dem Düsendurchgangsstück 4.2 angeformten, Rasterelement 4.5 und Dichtungslippen 4.8, die auf der äußeren Mantelfläche des Grundkörpers 4.1 rechts und links von dem Düsendurchgangsstück 4.2 angeformt sind, einem Federstift 4.3 und einer Druckfeder 4.4. Im Ausführungsbeispiel bestehen der Grundkörper 4.1 und der Federstift 4.3 aus einem gleitfähigen und abriebfesten Kunststoff und die Druckfeder 4.4 aus einfachem Federstahl. Die Druckfeder 4.4 wird auf den Federstift 4.3 aufgesteckt und rastet mit ihrer ersten Windung zwischen einer ringförmigen Erhebung 4.3.3 und einem einseitig an dem Federstift 4.3 angeformten zylindrischen Bund 4.3.1 ein, wobei die Druckfeder 4.4 länger ausgeführt ist als der Federstift 4.3. Der mit der Druckfeder 4.4 bestückte Federstift 4.2 wird in den Hohlraum 4.6 des Grundkörpers 4.1 eingesteckt und das frei Ende der Druckfeder 4.4 in der Vertiefung 4.7 des Hohlraums 4.6 gegen Herausfallen verankert. Die so komplettierte Druckregeleinheit 4 wird in die Durchgangsbohrung 2.5 im Bereich der ersten Nut 2.4 des Ventilgrundkörpers 2 eingesetzt, so daß das Rasterelement 4.5 des Grundkörpers 4.1 in der ersten Nut 2.4. gegen horizontale Verdrehen einrastet und die kreissegmentförmige Außenfläche des Rasterelements 4.5 die äußere Mantelfläche des Ventilgrundkörpers 2 im Bereich der Nut 2.4 ergänzt. Das Düsendurchgangsstück 4.2 verbindet jetzt die beiden mittigen und axialen Düsendurchgänge 2.1 im Ventilgrundkörper 2 miteinander zu einem durchgehenden Düsendurchgang. Der erfindungsgemäße Stellring 5, der nach Fig.2, Fig.7 und Fig.8 vorzugsweise aus einem einstückigen Spritzgußteil aus Kunststoff besteht, hat eine innere Mantelfläche 5.2, die in axialer Richtung etwa zur Hälfte eine exzentrische Form aufweist, mit einem Anschlag 5.4 und mehreren konkav und halbrund zur Mitte des Stellrings 5 gerichteten, in die innere Mantelfläche 5.2 eingeformten Rastern 5.3 ausgestattet ist. Die äußere Mantelfläche 5.5 des Stellrings 6 ist in axialer Richtung vorzugsweise etwa zu zwei Dritteln mit einem Rändelrand 5.6 und im letzten Drittel mit eine horizontal ausgerichteten Pfeilanzeige 5.7 mit einer Plusauzeige einerseits und einer Minusanzeige andererseits gekennzeichnet, mit der die Öffnungs- und Schließrichtung des Druckregelventils 1 gekennzeichnet ist. Dieser Stellring 5 wird nun in axialer Richtung mit der Drehrichtungsanzeige zuerst auf den Ventilgrundkörper 2 in Richtung der Bundflächen 2.6, 2.7 und 2.8 geschoben, wo er auf der Bundfläche 2.7 einrastet und mit der Bundfläche 2.6 am Außendurchmesser und mit der Bundfkäche 2.8 am Innendurchmesser des Ventilgrundkörpers 2 abschließt. Gleichzeitig rastet, gemäß Fig.2, die in der Durchgangsbohrung 2.5 des Ventilgrundkörpers 2 sitzende komplettierte Druckregeleinheit 4 mit dem aus der Durchgangsbohrung 2.5 herausragenden Federstift 4.3 in transversaler Richtung in eines der Raster 5.3 des Stellrings 5 ein. Abschließend wird der vorzugsweise aus Kunststoff bestehende Sicherheitsring 5,1, gemäß Fig.9 in axialer Richtung auf den Ventilgrundkörper 2 geschoben und über die Fase 2.10 in die zweite Nut 2.9 des Ventilgrundkörpers 2 eingerastet, wodurch die Druckregeleinheit 4 und der Stellring 5 funktionssicher auf dem Ventilgrundkörper 2 arretiert und befestigt sind. Das erfindungsgemäß montierte, von Hand regulierbare Druckregelventil 1 wird nun mit dem Außengewinde 2.2 in die Mündung einer beliebigen Druckluftpistole geschraubt und in das Innengewinde 2.3 wird ein herkömmlicher Düsenkörper 3 eingeschraubt. Durch horizontales Drehen des Stellrings 5, was auch sehr leicht während des Arbeitens möglich ist, wird der Grundkörper 4.1 der Druckregeleinheit 4 in transversaler Richtung in der Durchgangsbohrung 2.5 verschoben, wodurch sich auch das Düsendurchgangsstück 4.2 zu den mittigen und axialen Düsendurchgängen 2.1, gemäß Fig.1, verschiebt und sich der Düsendurchgang 2.1 je nach Drehrichtung verkleinert oder vergrößert und somit der Druck, der aus der Druckluftpistole austretenden Luft verringert oder erhöht.

### Aufstellung der verwendeten Bezugszeichen

- 1: Druckluftventil,
- 2: Ventilgrundkörper,
- 2.1: Düsendurchgang,
- 2.2: Außengewinde,
- 2.3: Innengewinde,
- 2.4: erste Nut,
- 2.5: Durchgangsbohrung,
- 2.6: erster Bund,
- 2.7: zweiter Bund,
- 2.8: dritter Bund,
- 2.9: zweite Nut,
- 2.10: Fase,
- 3.: Düsenkörper,
- 4.: Druckregeleinheit,
- 4.1: Grundkörper,
- 4.2: Düsendurchgangsstück,
- 4.3: Federstift,
- 4.3.1: zylindrische Bund,
- 4.3.2: kreissegmentförmige Stirnfläche,
- 4.3.3: ringförmige Erhebung,
- 4.4: Druckfeder,
- 4.5: Rasterelement,
- 4.6: Hohlraum,
- 4.7: Vertiefung,
- 4.8: Dichtungslippen,
- 5.: Stellring,
- 5.1: Sicherungsring,
- 5.2: innere Mantelfläche,
- 5.3: Raster,
- 5.4: Anschlag,
- 5.5: äußere Mantelfläche,
- 5.6: Rändelrand,
- 5.7: Pfeilanzeige

## Patentansprüche

1. Handbetätigtes Druckregelventil (1) für Druckluftpistolen, das einen Ventilgrundkörper (2) mit axial und mittig angeordnetem Düsendurchgang (2.1), ein Außengewinde (2.2) zum Einschrauben des Druckregelventils (1) in die Mündung einer beliebigen Druckluftpistole, ein Innengewinde (2.3) zur Aufnahme eines Düsenkörpers (3), eine Druckregeleinheit (4) und einen von Hand zu betätigenden Stellring (5) aufweist, **dadurch gekennzeichnet,**
**daß** die Druckregeleinheit (4) mit einem mittig angeordneten Düsendurchgangsstück (4.2), durch den Stellring (5) mit Hilfe eines Sicherungsrings (5.1) in einer Querbohrung (2.5) des Ventilgrundkörpers (2) transversal und funktionssicher gehalten und der axiale und mittige erste Düsendurchgang (2.1) innerhalb der Querbohrung (2.5) durch das Düsendurchgangsstück (4.2) der Druckregeleinheit (4) überbrückbar und durchgängig schließbar ist,
**daß** der Querschnitt des Düsendurchgangs (2.1) im Bereich der Querbohrung (2.5), durch manuelle Drehung des Stellrings (5) in einer horizontalen Ebene um den Ventilgrundkörper (2) und durch transversale Verschiebung der Druckregeleinheit (4) und des Düsendurchgangsstücks (4.2) zum Düsendurchgang (2.1) in, nach Anzahl und Größe, bestimmbaren Bereichen zu verkleinern und zu vergrößern ist,
**daß** die Druckregeleinheit (4), einen Grundkörper (4.1) mit dem mittig angeordneten Düsendurchgangsstück (4.2), einen Federstift (4.3) und eine Druckfeder (4.4) aufweist und im eingebauten Zustand der Federstift (4.3) durch die aufsitzende Druckfeder (4.4) aus dem Grundkörper (4.1) und der Querbohrung (2.5) transversal zur Längsachse des Druckregelventils (1) radial beweglich herausragt und durch Drehung des Stellrings (5) nacheinander in mehrere, flach ausgeführte Raster (5.3) einrastet, die in einer inneren Mantelfläche (5.2) des Stellrings (5) eingeformt sind.

2. Handbetätigtes Druckregelventil (1) für Druckluftpistolen, nach Anspruch 1, **dadurch gekennzeichnet, daß** der Grundkörper (4.1) der Druckregeleinheit (4) zylindrisch ausgebildet und einseitig mit einem, zur äußeren Mantelfläche des Ventilgrundkörpers (2) gerichteten, kreissegmentförmig ausgebildeten Rasterelement (4.5) verschlossen ist und das mittige Düsendurchgangsstück (4.2) aufweist, das rechtwinklig zu dem Rasterelement (4.5) verläuft.

3. Handbetätigtes Druckregelventil (1) für Druckluftpistolen, nach Anspruch 1, **dadurch gekennzeichnet, daß** der Grundkörper (4.1) an seiner offenen Seite etwa zu einem Drittel einen Hohlraum (4.6) mit einer Vertiefung (4.7) zum Einrasten der Druckfeder (4.4) aufweist und auf seiner äußeren Mantelfläche rechts und links neben dem zweiten Düsendurchgang (4.2) mit jeweils mindestens einer radial angeformten Dichtungslippe (4.8) ausgestattet ist, durch die eine Abdichtung des Düsendurchgangs (2.1) und des Düsendurchgangsstücks (4.2) gewährleistet ist.

4. Handbetätigtes Druckregelventil (1) für Druckluftpistolen, nach Anspruch 1, **dadurch gekennzeichnet, daß** der Federstift (4.3) der Druckregeleinheit (4) einseitig einen zylindrischen Bund (4.3.1) mit einer kreissegmentförmig ausgebildeten Stirnfläche (4.3.2) aufweist und hinter dem Bund eine ringförmige Erhebung (4.3.3) angeformt ist, an der die Druckfeder (4.4) mit ihrer ersten Windung an der ringförmigen Erhebung (4.3.3) gehalten ist.

5. Handbetätigtes Druckregelventil (1) für Druckluftpistolen, nach Anspruch 1, **dadurch gekennzeichnet, daß** der Stellring (5) im Bereich einer ersten Nut (2.4) in der dort angeordneten Querbohrung (2.5) zwischen drei Bundflächen (2.6, 2.7, 2.8) und einer zweiten Nut (2.9) und eine Fase (2.10) des Ventilgrundkörpers (2) angeordnet und durch den Sicherungsring (5.1) kraftschlüssig gehalten ist,

6. Handbetätigtes Druckregelventil (1) für Druckluftpistolen, nach Anspruch 1, **dadurch gekennzeichnet, daß** der Stellring (5) an seiner inneren Mantelfläche (5.2) in axialer Richtung etwa bis zur Hälfte eine exzentrische Form aufweist, die mit einem Anschlag (5.4) und mehreren, konkav und halbrund ausgebildeten, in die innere Mantelfläche (5.2) eingeformten Raster (5.3) ausgestattet ist, in die der zylindrische Bund (4.3.1) des Federstifts (4.3) mit seiner kreissegmentförmig ausgebildeten Stirnfläche (4.3.2) nacheinander einrastet.

7. Handbetätigtes Druckregelventil (1) für Druckluftpistolen, nach Anspruch 1, **dadurch gekennzeichnet, daß** die Form der kreissegmentförmig ausgebildeten Stirnfläche (4.3.2) des zylindrischen Bunds (4.3.1) der Form der, in die innere Mantelfläche (5.2) eingeformten, Raster (5.3) des Stellrings (5) angepaßt ist

8. Handbetätigtes Druckregelventil (1) für Druckluftpistolen, nach Anspruch 1, **dadurch gekennzeichnet, daß** der Stellring (5) an seiner äußeren Mantelfläche (5.5) über etwa zwei Drittel einen in axialer Richtung eingeformten Rändelrand (5.6) und zu etwa einem Drittel eine ebene Außenfläche aufweist, in der in horizontaler Richtung eine Pfeilanzeige (5.7) mit + und - eingeformt ist, mit der die Öffnungs- und Schließrichtung des handbetätigten Druckregelventils (1) **gekennzeichnet** ist.

9. Handbetätigtes Druckregelventil (1) für Druckluftpistolen, nach Anspruch 1, **dadurch gekennzeichnet, daß** der Ventilgrundkörper (2) ein Drehteil aus Aluminium, der Grundkörper (4.1) und der Federstift (4.3) der Druckregeleinheit (4) aus einem gleitfähigen und abriebfesten Kunststoff und der Stellring (5) und der Sicherungsring (5.1) aus einem Kunststoff ohne besonderen Stabilitätsanforderungen gefertigt ist.

## Claims

1. A manually operated, pressure-regulation valve (1) for pneumatic guns, having a valve body (2) with axially and centrally arranged nozzle passageway (2.1), an external thread (2.2) for screwing the pressure-regulation valve (1) into the orifice of an arbitrary pneumatic gun, an internal thread (2.3) for accommodating a nozzle body (3), a pressure-regulation unit (4), and a manually operable adjusting ring (5), wherein
the pressure-regulation unit (4), along with a centrally arranged, nozzle-passageway piece (4.2), are transversally and reliably retained within a transverse bore (2.5) in the valve body (2) by the adjusting ring (5), with the aid of a retaining ring (5.1), and the axial and centred first nozzle passageway (2.1) within the transverse bore (2.5) may be bypassed and closed off over its full length by the nozzle-passageway piece (4.2) of the pressure-regulation unit (4),
the cross-section of the nozzle passageway (2.1) in the vicinity of the transverse bore (2.5) may be reduced and enlarged over a variable number of ranges having variable extents by manually rotating the adjusting ring (5) about the valve body (2) in a horizontal plane and by transversally sliding the pressure-regulation unit (4) and nozzle-transit piece (4.2) toward the nozzle passageway (2.1),
the pressure-regulation unit (4) has a body (4.1) having the centrally arranged nozzle-passageway piece (4.2), a spring-loaded pin (4.3), and a compression spring (4.4), and, in the installed status, the spring-loaded pin (4.3) protrudes transversally, with respect to the long axis of the pressure-regulation valve (1), from the body (4.1) and the transverse bore (2.5) and is free to move radially with respect thereto due to the action of the compression spring (4.4), and successively engages several, shallow indentations (5.3) formed in an inner surface (5.2) of the adjusting ring (5) when the adjusting ring (5) is rotated.

2. A manually operated, pressure-regulation valve (1) for pneumatic guns according to claim 1, wherein the body (4.1) of the pressure-regulation unit (4) has a cylindrical shape, has one of its ends terminated by a circular-segment-shaped element (4.5) facing the outer surface of the valve body (2), and incorporates the central nozzle-passageway piece (4.2) that is oriented at right angles to the element (4.5).

3. A manually operated, pressure-regulation valve (1) for pneumatic guns according to claim 1, wherein the body (4.1) has a cavity (4.6) on its open end set at around one-third of its length with a recess (4.7) for retaining the compression spring (4.4) and is equipped with at least one circumferential ridge (4.8), on its outer surface on either side of, and adjacent to, the second nozzle passageway (4.2) that will ensure a sealing of the nozzle passageway (2.1) and nozzle-passageway piece (4.2).

4. A manually operated, pressure-regulation valve (1) for pneumatic guns according to claim 1, wherein one end of the spring-loaded pin (4.3) of the pressure-regulation unit (4) has a cylindrical collar (4.3.1) having a circular-segment-shaped tip (4.3.2) and an annular protrusion (4.3.3) formed behind the collar. This protrusion retains the compression spring (4.4), the lower winding of which rests on the annular protrusion (4.3.3).

5. A manually operated, pressure-regulation valve (1) for pneumatic guns according to claim 1, wherein the adjusting ring (5) is arranged in the vicinity of a first groove (2.4) in the transverse bore (2.5), sandwiched between three abutment surfaces (2.6, 2.7, 2.8) and a second groove (2.9) and a bevel (2.10) arranged on the valve body (2), and retained by abutment against the retaining ring (5.1).

6. A manually operated, pressure-regulation valve (1) for pneumatic guns according to claim 1, wherein the adjusting ring (5) has an eccentric shape extending over around half its length that is equipped with a stop (5.4) and several concave and semicircular indentations (5.3) formed in the inner surface (5.2), in which the cylindrical collar (4.3.1) of the spring-loaded pin (4.3) with its circular-segment-shaped tip (4.3.2) successively engages.

7. A manually operated, pressure-regulation valve (1) for pneumatic guns according to claim 1, wherein the shape of the circular-segment-shaped tip (4.3.2) of the cylindrical collar (4.3.1) is adapted to suit the shape of the grooves (5.3) formed on the inner surface (5.2) of the adjusting ring (5).

8. A manually operated, pressure-regulation valve (1) for pneumatic guns according to claim 1, wherein the outer surface (5.5) of the adjusting ring (5) has circumferential flutes (5.6) extending over around two-thirds of its length and the remaining around one-third thereof is smooth and embossed with a horizontal, arrow indication (5.7) and a + and -, indicating the directions of rotation for opening and closing the manually operated, pressure-regulation valve (1).

9. A manually operated, pressure-regulation valve (1) for pneumatic guns according to claim 1, wherein the valve body (2) is a lathe-turned, aluminium component, the body (4.1) and spring-loaded pin (4.3) of the pressure-regulation unit (4) are fabricated from a slick, abrasion-resistant plastic, and the adjusting ring (5) and retaining ring (5.1) are fabricated from a plastic that need not meet any particular stability requirements.

## Revendications

1. Valve de régulation de pression (1) à commande manuelle pour pistolets à air comprimé, comprenant un corps de base de valve (2) avec un passage de buse (2.1) disposé de manière axiale et centrale, un filetage extérieur (2.2) pour visser ladite valve de régulation de pression (1) dans la bouche d'un pistolet à air comprime quelconque, un filetage intérieur (2.3) pour recevoir un corps de buse (3), une unité de régulation de pression (4) ainsi qu'une bague de réglage (5) à actionner manuellement, **caractérisée par le fait**
**que** ladite unité de régulation de pression (4) avec une pièce de passage de buse (4.2) disposée de manière centrale est maintenue par ladite bague de réglage (5) à l'aide d'un circlip (5.1) transversalement et à fonctionnement sûr dans un perçage transversal (2.5) du corps de base de valve (2) et que le premier passage de buse (2.1) axial et central, à l'intérieur du perçage transversal (2.5), peut être ponté et fermé en entier par ladite pièce de passage de buse (4.2) de l'unité de régulation de pression (4),
**que** la section transversale du passage de buse (2.1) au niveau du perçage transversal (2.5) est à réduire et à agrandir dans des plages déterminables selon le nombre et la taille, par une rotation manuelle de la bague,de réglage (5) dans un plan horizontal autour du corps de base de valve (2) et par un déplacement transversal de ladite unité de régulation de pression (4) et de la pièce de passage de buse (4.2) vers le passage de buse (2.1),
**que** ladite unité de régulation de pression (4) présente un corps de base (4.1) comprenant ladite pièce de passage de buse (4.2) disposée de manière centrale, une goupille faisant ressort (4.3) ainsi qu'un ressort à pression (4.4) et que, en état monté et dû au ressort à pression (4.4) y posé, ladite goupille faisant ressort (4.3) fait saillie hors du corps de base (4.1) et du perçage transversal (2.5) transversalement à l'axe longitudinal de la valve de régulation de pression (1), de manière à être radialement déplaçable et s'enclenche successivement, par une rotation de la bague de réglage (5), dans plusieurs crans d'arrêt plans (5.3) qui sont formés dans une surface latérale intérieure (5.2) de la bague de réglage (5).

2. Valve de régulation de pression (1) à commande manuelle pour pistolets à air comprimé, selon la revendication 1, **caractérisée par le fait que** ledit corps de base (4.1) de l'unité de régulation de pression (4) est réalisé de façon cylindrique et est fermé sur un côté par un élément d'arrêt (4.5) dirigé en direction de la surface latérale extérieure du corps de base de valve (2) et réalisé en forme de segment de cercle, et qu'il présente ladite pièce centrale de passage de buse (4.2) qui s'étend à angle droit par rapport à l'élément d'arrêt (4.5).

3. Valve de régulation de pression (1) à commande manuelle pour pistolets à air comprimé, selon la revendication 1, **caractérisée par le fait que** le corps de base (4.1) présente sur son côté ouvert, à peu près sur un tiers, un espace vide (4.6) comprenant un creux (4.7) d'enclenchement du ressort à pression (4.4.), et qu'il est pourvu, sur sa surface latérale extérieure, à droite et à gauche du deuxième passage de buse (4.2), d'au moins respectivement une lèvre d'étanchéité (4.8) y formée radialement qui permet d'assurer un étanchement du passage de buse (2.1) et de la pièce de passage de buse (4.2).

4. Valve de régulation de pression (1) à commande manuelle pour pistolets à air comprimé, selon la revendication 1, **caractérisée par le fait que** la goupille faisant ressort (4.3) de l'unité de régulation de pression (4) présente, sur un côté, un collet cylindrique (4.3.1) avec une surface frontale en forme de segment de cercle (4.3.2) et que, derrière ledit collet, est formée une élévation annulaire (4.3.3) sur laquelle est maintenu le ressort à pression (4.4) par sa première spire.

5. Valve de régulation de pression (1) à commande manuelle pour pistolets à air comprimé, selon la revendication 1, **caractérisée par le fait que** la bague de réglage (5) est disposée au niveau d'une première rainure (2.4) entre trois faces de collet (2.6, 2.7, 2.8) et une seconde rainure (2.9) et un chanfrein (2.10) du corps de base de valve (2) et est maintenue par adhérence dans le perçage transversal (2.5) disposé dans ladite rainure (2.4) ainsi qu'au moyen dudit circlip (5.1).

6. Valve de régulation de pression (1) à commande manuelle pour pistolets à air comprimé, selon la revendication 1, **caractérisée par le fait que**, sur sa surface latérale intérieure (5.2), ladite bague de réglage (5) présente, dans la direction axiale à peu près jusqu'à la moitié, une forme excentrique qui est pourvue d'une butée (5.4) et de plusieurs crans d'arrêt (5.3) concaves et demi-ronds formés dans la surface latérale intérieure (5.2), dans lesquels s'enclenche successivement ledit collet cylindrique (4.3.1) de la goupille faisant ressort (4.3) par sa surface frontale en forme de segment de cercle (4.3.2).

7. Valve de régulation de pression (1) à commande manuelle pour pistolets à air comprimé, selon la revendication 1, **caractérisée par le fait que** la forme de ladite surface frontale en forme de segment de cercle (4.3.2) du collet cylindrique (4.3.1) est adaptée à la forme des crans d'arrêt (5.3) de la bague de réglage (5), qui sont formés dans la surface latérale intérieure (5.2).

8. Valve de régulation de pression (1) à commande manuelle pour pistolets à air comprimé, selon la revendication 1, **caractérisée par le fait que**, sur sa surface latérale extérieure (5.5), ladite bague de réglage (5) présente, à peu près sur deux tiers, un bord moleté (5.6) formé là-dedans dans la direction axiale ainsi que, sur un tiers environ, une surface extérieure plane dans laquelle est formée, dans la direction horizontale, une flèche (5.7) avec + et - qui sert à indiquer les directions d'ouverture et de fermeture de la valve de régulation de pression (1) à commande manuelle.

9. Valve de régulation de pression (1) à commande manuelle pour pistolets à air comprimé, selon la revendication 1, **caractérisée par le fait que** le corps de base de valve (2) est une pièce tournée en aluminium, que le corps de base (4.1) et la goupille faisant ressort (4.3) de l'unité de régulation de pression (4) sont réalisés dans une matière plastique apte à glisser et résistante à l'abrasion et que ladite bague de réglage (5) et le circlip (5.1) sont réalisés dans une matière plastique sans aucune exigence particulière de stabilité.
